# EUROPEAN PATENT SPECIFICATION

(11) **EP 2 924 946 B1**
(45) Date of publication and mention of the grant of the patent: **21.09.2016**
(21) Application number: 14382113.0
(22) Date of filing: 28.03.2014
(51) Int. Cl.: H04L 29/06, H04M 3/02

(54) **A computer implemented method and system for alerting an incoming communication in a communication application and computer programs thereof**
Computerimplementiertes Verfahren und System zur Benachrichtigung über eingehende Kommunikation in einer Kommunikationsanwendung und Computerprogramme dafür
Procédé mis en oeuvre par ordinateur et système permettant d'alerter une communication entrante dans une application de communication et programmes informatiques associés

(43) Date of publication of application: 30.09.2015
(73) Proprietor: Telefonica Digital España, S.L.U., 28013 Madrid (ES)
(72) Inventor: Serna Pozuelo, Jorge, 28013 Madrid (ES); Perez Cubero, Roberto, 28013 Madrid (ES); Neystadt, John (Eugene), 44471 Kfar-Saba (IL)
(74) Representative: Carlos Hernando, Borja

(56) References cited:
- WO-A1-2012/175995
- US-A1- 2012 033 027

## Description

### Field of the art

Present invention generally relates to the field of communications, and more particularly to a computer implemented method and system and computer programs for alerting an incoming communication in a communication application.

### Background of the invention

Voice over IP (VoIP) communication applications, such as Skype®, Viber®, Line®, TU Go®, etc. are usually implemented in iOS® and Android®, two dominant mobile Operating Systems.

iOS® is one of the two dominant computing devices Operating Systems, on top of which said variety of communication applications allow users to receive phone/video communications. Differently from Android®, iOS® imposes a number of restrictions on applications, intended to conserve battery and memory usage of the applications. iOS® Operating System is continuously evolving and its characteristics change from one release to another. However the following restrictions are found in at least certain versions of the iOS® Operating System:
1. Background applications are not allowed to access do-not-disturb settings. Thus background communication applications that play audio can't respect do-not-disturb & volume settings, so that ringing will be played if user put phone in do-not-disturb/silent mode and audio would be played using a volume settings for music (which may be low), and not the volume for the alerts (which is usually high).
2. In locked screen, when user perform the unlock action, the notifying application is not brought to foreground, unless user performs the unlock by acting on the specific notification related with the communication application. This latter behavior may not be the most frequent one, given the fact that in certain versions of the operating system the user can unlock the device by swiping at any point in the screen and not just in the notification, and many users are not aware that different behaviors result depending on the place in the screen where the unlock gesture is performed. This means that even for long sustained alerting tones, the user might find him or her in the home screen of the device with no means to access the communication application if they don't open it up again explicitly.
3. Background application may be suspended at any time, without notice. An example of such a VoIP communication application is disclosed by the document US2012033027, Murphy William, published on 9 February 2012.

Despite the dramatic effects that the previously mentioned limitations have on the functionality of communication applications and specifically on the Call Answer Rate, no reference has been found in the background that associates these limitations with this undesired effect, and consequently no method has been found in the state-of-the-art to overcome these limitations. As a matter of fact no single communications application has been found as of the date of writing the present disclosure that implements any method to overcome these limitations in order to improve the success rate of the communication alerts.

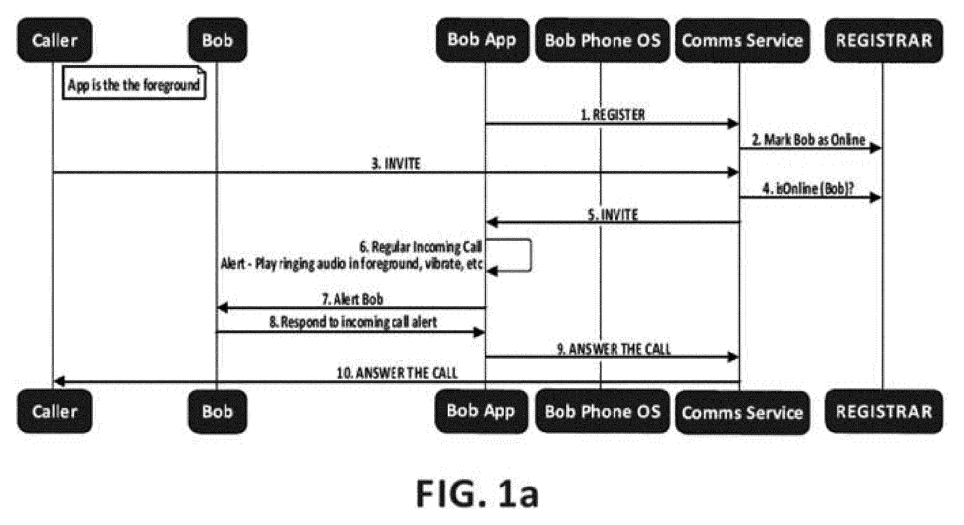

Fig. 1a illustrates current behavior when the application is running in the foreground of a computing device, i.e. the application is active and is being displayed in the computing device's screen. Communications Application is started and registers (1) with the corresponding Communications Service. Communications System, adds (2) a record to registrar module indicating that Bob's Application is online (the application of a user called Bob). Typical communication systems would also implement a mechanism to detect when Bob's Application has stopped being online, such as heartbeat, where the Application would need to periodically update its registration, and lack of a heartbeat over certain time interval, would trigger removal of active registration from the registrar module. Upon a communication(3) destined to Bob from other service or user (e.g. Alice) arriving to the Communications Service, the Communications System checks with registrar module (4) whether Bob is online.

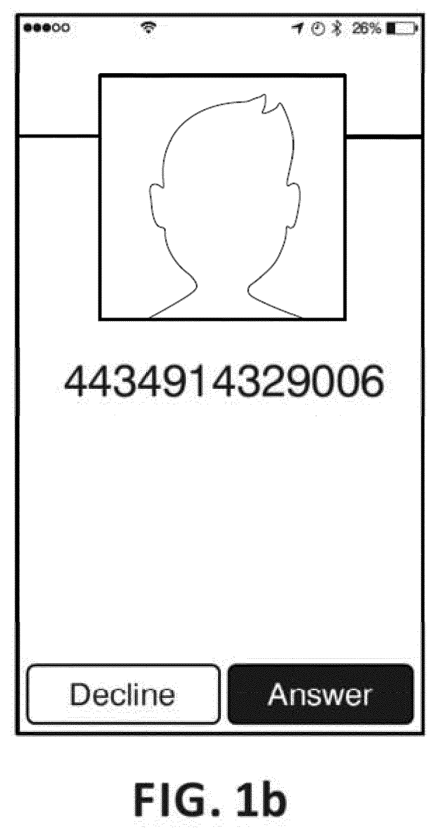

Communications System signals (5) the Application on details of incoming call. Bob's Application checks whether it is in the foreground mode. In foreground mode the Application signals (6) incoming communication regularly - display incoming communication details, plays music, vibrates the phone, etc., which causes Bob being, alerted (7). Fig. 1b provides an example of the User Experience that can be provided in this alerting step. Then, Bob notices the incoming communication alert and interacts with the application to request responding (8) to the call. Application then signals (9) Communications Service, that communication should be answered and in turn the communication is established (10) with the calling service/user Alice.

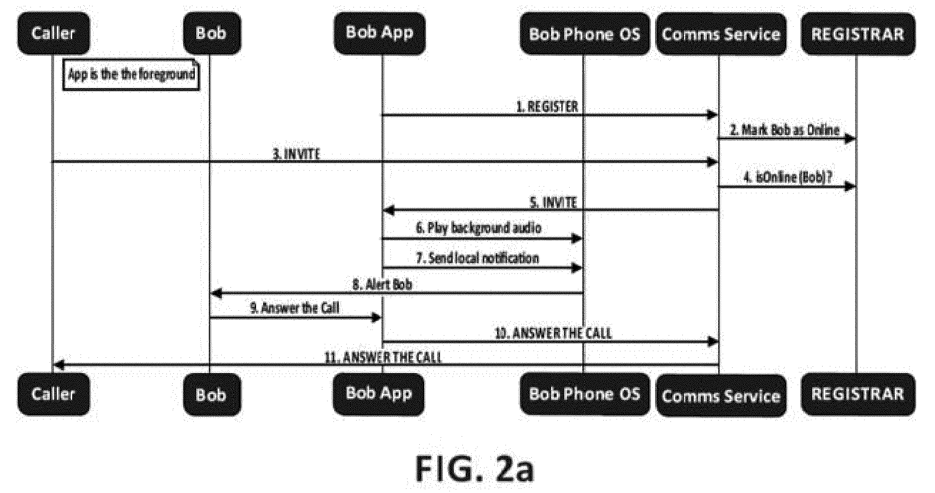

Fig. 2a illustrates current behavior when the application is running in background of a computing device, i.e. the application is active but it is not being displayed in the computing device's screen, but instead other application or the home screen is being displayed, or the device is in a locked screen status. By being in a locked screen status it is meant that the device is in a special state in which just a set of specific actions (i.e. unlocking actions, such as swipe to unlock) allow the user to interact with the device, thus preventing the user from accidentally invoking undesired actions, e.g. accepting a communication when the device is in the pocket. In this case, steps (1) to (5) are the same as in previous flow.

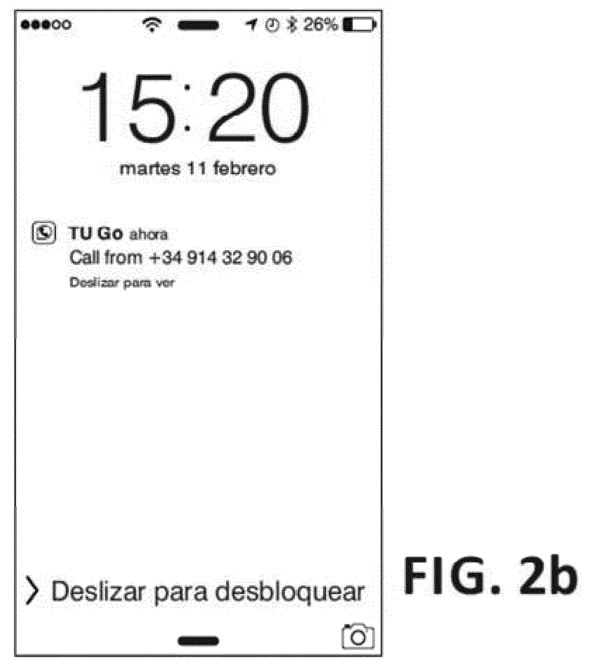

In background mode, or when the computing device is locked, Bob can't see the incoming communication notification, and alternative logic is usually performed. Bob's Application can start playing (6) background audio for incoming call. Due to iOS® current limitation, the music is played with volume setting intended for music and not for ringing and silent/do-not-disturb settings of the phone cannot be respected, representing one of the current limitations in this type of operating systems. Then Bob application triggers (7) a single local notification which appears among other pending notifications on the locked screen, which causes Bob being alerted (8). Fig. 2b provides an example of the User Experience that can be provided in this alerting step. If Bob unlocks the phone, by swiping on the notification, application is properly activated, but if he unlocks phone by swiping other screen area, he arrives at home screen without activating the application, thus missing the opportunity to react promptly to the incoming communication alert, and likely missing the call. This represents another of the limitations found in the prior art with a very negative impact in the communication alert success rate.

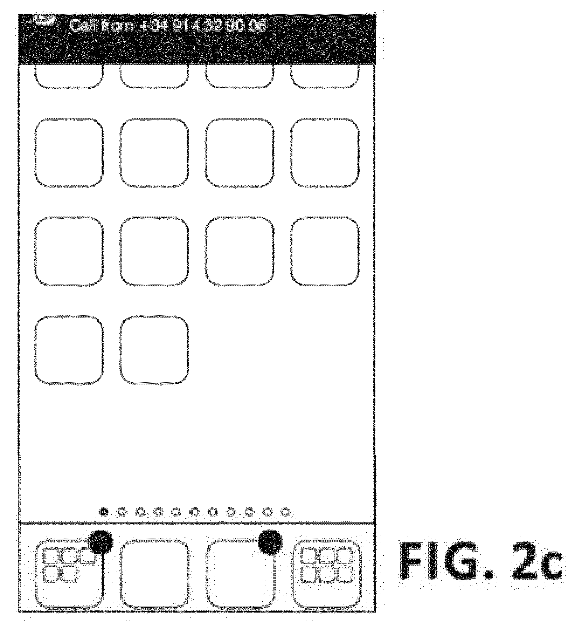

If other application, or the home screen, is running in the foreground, the notification appears as a bar at the top of the screen for some limited time, which causes Bob being alerted (8). Fig. 2c provides an example of the User Experience that can be provided in this alerting step. Bob must be quick enough to activate this notification before it disappears, in order not to miss the incoming communication alert. This represents yet another limitation found in the prior art with a very negative impact in the communication alert success rate. Finally, when Bob chooses to acknowledge and answer (9) the incoming call, Application signals (10) Communications Service, that communication should be answered, and in turn the communication is established (11) with the calling service/user Alice.

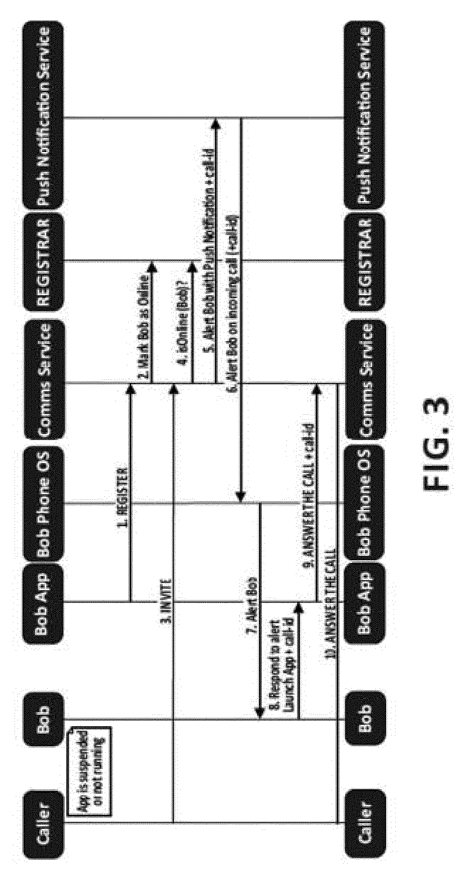

Fig. 3 illustrates current behavior when the application is suspended or not running in the computing device. In this case, steps 1 to 4 are the same as in previous two flows (foreground Fig. 1a and background Fig. 2a). As Bob is offline, that is, the communication application is suspended or not running in his computing device, the Communications System cannot directly alert of the incoming communication to the application but an alternative procedure needs to be used, e.g. requesting (5) a Push Notification Service to send a push notification to Bob's phone OS with incoming communication details, including identifier, that enables to identify the incoming call.

Push Notification Service honors the request and sends (6) a notification to Bob's Phone OS, which alerts Bob (7) by prompting with a notification, which includes communication identifier. The user experience of remote notifications (triggered through Push Notification Service) can be identical to local notification and is shown on Figs. 2b and 2c. Alternatively to the previous step and in case a silent Push Notification mechanism is available in the Operating System, that is, a notification that alerts the Application directly without performing any noticeable alert to the user (e.g., silent Push Notification mechanism in iOS7) this notification could allow to activate the application and implement the same logic as in the case of the application running in the background, as described above.

The limitation in both cases is, as described before, that Bob receives a single notification, and can miss it or also can be transferred to a home screen from push notification alert displayed at a device with locked screen. In this case if Bob manually activates the communications application, it doesn't have the call-id from the push notification, preventing the application to answer the call. Only if Bob's does see (7) the notification on time, and properly acknowledge it, then Mobile OS can activate (8) the Application, in "call-pick-up" mode passing call-identifier. When Bob application is finally activated, it signals (9) Communications Service, that communication should be answered, optionally passing communication identifier to pick up the incoming call, and the communication is established (10) with the calling service/user Alice. As it can be appreciated this scenario presents similar limitations to the ones described in the previous scenarios.

Therefore, the usual mechanism said communication applications use in iOS® for notifying incoming communications is based on displaying a single local notification with a prolonged ringtone. This provides a long ringing sound but only a single vibration, which proves ineffective in common scenarios such as the user having muted their device, plus it does not solve the issue of the lock-screen unlocking.

The fact that these restrictions are present in iOS® and this operating system is taken as an example when describing the merits of the present invention does not rule out that other present or future Operating Systems may present similar limitations that can be overcome by the present invention.

### Summary of the Invention

To overcome the above mentioned limitations in the case of a communication application running in the background or being suspended/not running in a computing device, present invention in accordance with a first aspect provides a computer implemented method wherein a communication service receives a request, from at least one caller, for a communication destined to a user in at least one communication application and checks a state of said communication application with regard to a computing device, e.g. an iPhone, of the user. The communication application being adapted for a determined operating system installed in the computing device and being registered in the communication service.

On contrary of the known proposals the computer implemented method of the first aspect alerts said requested communication by: a) triggering, the communication application, an indication to the computing device operating system involving at least one of a visual indication, an audible indication or a vibration; then, after a certain period of time, preferably less than five seconds, b) requesting by said communication application to delete by the computing device operating system the triggered indication; and c) following that repeating steps a) and b) until the requested communication is established or the communication request from said caller finishes.

In case the communication application running in background of the computing device, the communication application is notified, by the communication service, of the details of the requested communication right after said state checking.

Alternatively, if the communication application is offline in the computing device, i.e. suspended or not running, a push notification service external of the computing device is used, right after said state checking, for informing the computing device operating system of the details of the requested communication and of an identifier thereof. After that, the computing device operating system initiates the offline communication application either automatically, in case of a silent push notification, or upon user action on the notification otherwise.

According to an embodiment, previous to performing the triggering, any previous notification of the communication application stored in the computing device operating system is deleted therein.

According to another embodiment, steps a), b) and c) are repeated in case the user unlocks the computing device and the communication application remains suspended or running in background of the computing device.

The communication application may be a local application installed in the computing device or alternatively a web communication application running in a browser of another computing device.

The requested communication comprises a real time communication including at least a voice communication or a video call.

In a second aspect the invention provides a computed implemented system for alerting an incoming communication in a communication application, including: a communication service configured to receive from a caller a request for a communication in at least one communication application and to check a state of said communication application with regard to a computing device of a user; and said communication application configured to be registered in the communication service and being appropriate for a determined operating system installed in the computing device. In addition, in the system of the second aspect the communication application and the computing device operating system are configured to work in a loop until the communication request is established or it finishes. For that reason, the communication application is further configured to trigger to the computing device operating system an indication involving at least one of a visual indication, an audible indication or a vibration; to wait a certain period of time and to further request to delete by said computing device operating system said triggered indication.

The system of the second aspect is adapted to implement the method of the first aspect.

In accordance with an embodiment, a push notification service external to the computing device is configured to inform of the requested communication details and of an identifier thereof to the computing device operating system.

The subject matter described herein can be implemented in software in combination with hardware and/or firmware, or a suitable combination of them. For example, the subject matter described herein can be implemented in software executed by a processor.

According to a third aspect there is provided a computer program product comprising computer executable software stored on a computer readable medium, the software being adapted to run at a computer or other processing means characterized in that when said computer executable software is loaded and read by said computer or other processing means, said computer or other processing means is able to at least perform the steps of the method according to any of claims 1-10.

Therefore the proposed method solves the different limitations present in the background, namely the following: when alerting an incoming communication the application does not need to rely on the background audio, which cannot honor the silent/do-not-disturb settings of the computing device, but can use an effective alternative alerting method; limited alerting capabilities of applications running in the background (e.g. firing a single vibration) are overcome; the problem the user faces when he/she unlocks the computing device and the operating system shows the home screen or any other application instead of activating the communications application, avoiding it to receive call-id from the push/local notification.

### Brief Description of the Drawings

The previous and other advantages and features will be more fully understood from the following detailed description of embodiments, with reference to the attached, which must be considered in an illustrative and non-limiting manner, in which:
Fig. 1a is a flow diagram illustrating the situation occurred when mobile communication application is ringing in the foreground.
Fig. 1b illustrates the user experience when the mobile communication application is ringing in the foreground.
Fig. 2a is a flow diagram illustrating the situation occurred when mobile communication application is ringing in the background.
Fig. 2b illustrates the user experience when computing device is locked and an incoming communication is alerted with a local or push notification.
Fig. 2c illustrates the user experience when computing device is unlocked on home screen and an incoming communication is alerted with a local or push notification.
Fig. 3 is a flow diagram illustrating the situation occurred for an incoming communication when mobile communication application is suspended or not running in the computing device.
Fig. 4 illustrates the system architecture used in the present invention, according to some embodiments, for alerting an incoming communication in a communication application.
Fig. 5 is a diagram illustrating the proposed flow for a user experience when a communication application is running in background or offline in the computing device according to the present invention.

### Detailed description of several embodiments

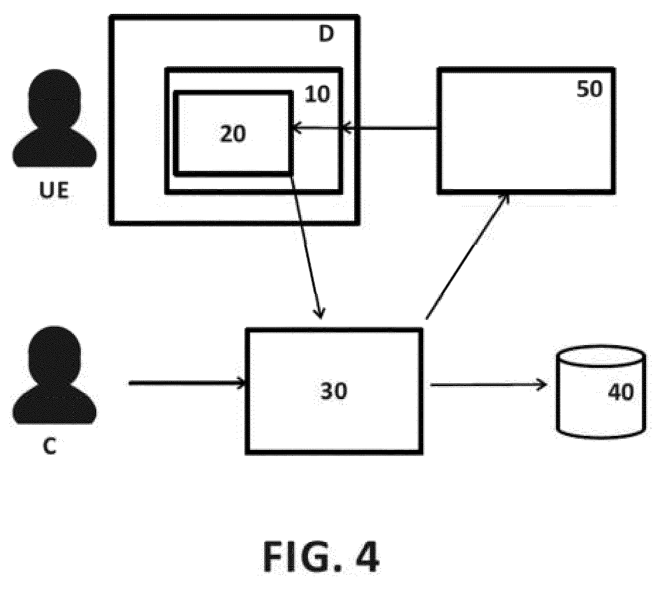

In reference to Fig. 4 it is illustrated a typical architecture of a communication system that can be used from a communications application 20 running in a computing device D. User UE, uses a computing device D, such as an iPhone, an iPad, etc., with an operating system 10, such as iOS®. The computing device D of user UE is running a communications application 20 (mentioned as Application from now on). The Application 20 communicates with a communications system 30, which provides the communication service and communicates with a registrar module 40, which may be part of the communications system 30 or an independent entity, which holds a list of connected active application 20 instances. Communication system 30 can send push notifications via Push Notification Service 50, which can alert the computing device D, which in turn can start/resume the communications application 20 on the computing device operating system 10. Communication system 30 is capable of receiving communication from other communication systems or users C.

The term 'communication' is to be understood in a wide sense referring to any kind of real time communications (such as voice call, video call, etc.).

The term 'application' is to be understood in a wide sense referring to different types of applications that may be available in a computing device, for instance native applications installed in the computing device, or web applications running in a browser.

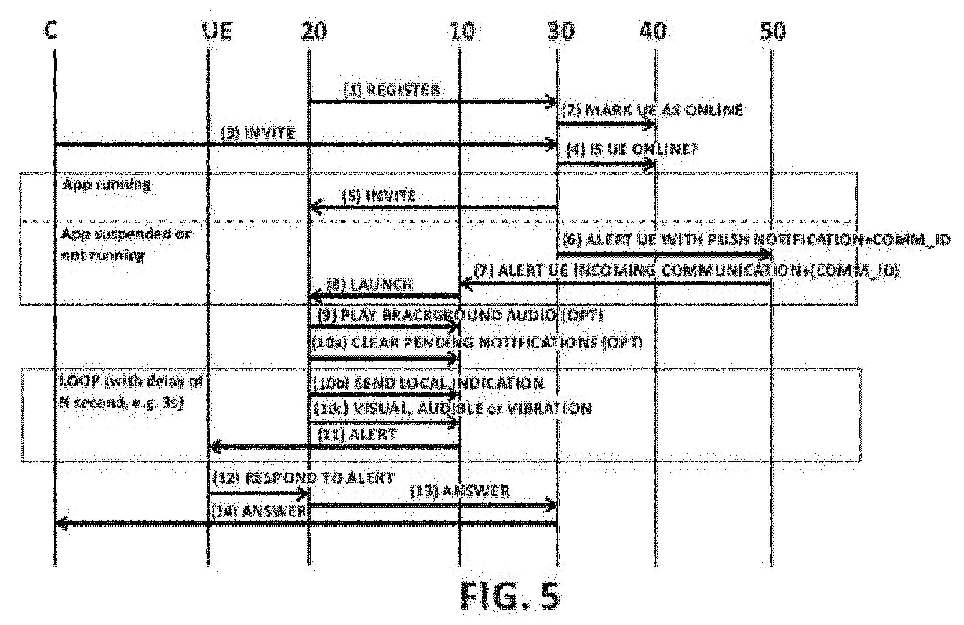

In reference to Fig. 5 it is illustrated the proposed methodology to overcome the previous identified limitations described in the background section for the case of an application 20 running in the background of the computing device D, or being suspended/not running thereof. As it can be seen in Fig. 5 said application 20 is started and registers (1) with a corresponding communications service 30. Interaction between the application 20 and the communication service 30 can be done over SIP or other known or custom signaling protocol, including HTTP-based WebRTC communication systems. Communications service then adds (2) a record to registrar module 40 indicating that the application 20 is online. Typical communication systems would also implement a mechanism to detect when the Application 20 has stopped being online, such as heartbeat, where the Application 20 would need to periodically update its registration, and lack of a heartbeat over certain time interval, would trigger removal of active registration from the registrar module 40.

Upon a communication (3) destined to user UE from other service or user C arriving to the communications service 30, the latter 30 checks (4) with registrar module 40 whether user UE is online.

For the case in which application 20 runs in background of the computing device D, communication service 30 directly signals (5) it on the incoming communication.

Alternatively, for the case in which application 20 is offline, i.e. it is suspended or is not running, and the computing device operating system 10 supports local notifications, communications service 30 sends (6) a notification, e.g. a silent notification, to the computing device operating system 10 through a Push Notification Service 50, which is passed (7) to the computing device operating system 10, which in turn activates (8) or launches the application 20 with a notification, including communication or call identifier. The user experience of remote notification (triggered through Push Notification Service 50) is identical to local notification as already described and illustrated in Figs. 2b and 2c. Optionally, the application 20 may start playing (9) background audio for the incoming communication.

At that point, application 20 performs the following steps in a loop until user UE answers the requested communication or the communication alert finishes (e.g. the calling party abandons calling, the communication is diverted to a voice mail, etc.) without stopping the loop when user UE unlocks the computing device D: Generates (10b) a local indication with incoming communication details, allowing the computing device operating system 10 to alert user UE, triggering at least one of a visual indication, an audible indication or a vibration (10c) of the computing device D. In the specific case of iOS® local indications are a mechanism, which honor do-no-disturb and volume settings for alerts as opposed to background music playing. Then, the application 20 waits a configurable number of seconds (e.g. 3 seconds as showed in the figure) and then requests the computing device operating system 10 to delete the previously issued local indication (this step has not been illustrated in the figure for simplicity's sake) and then goes back to step 10b. At one point user UE notices the incoming communication alert (11) and requests the application 20 to answer (12) the communication, so the alerting loop is stopped and the application 20 signals (13) to the communications service 30 that the communication should be answered, optionally passing communication identifier to pick up the incoming communication, and the communication is established (14) with the calling service/user C.

In accordance with an embodiment, before the generation of said local indication all pending local notifications regarding the application 20 may be removed or deleted (10a) from the computing device operating system 10.

The loop where successive local indications are generated shortly after the previous has been cleared is intended to hide from the user this repetition scheme, so that it appears as a single prolonged one, whilst overcoming the limitations of the local notifications (e.g. in iOS® local notifications are allowed to just fire a single vibration).

Not only this approach alerts more intensively user's UE attention than a single local or push notification (limited for instance to firing a single vibration), but also if user UE unlocked the computing device D without activating the specific local indication (e.g. by swiping on a point in the screen different from the notification) and thus being directed to the computing device's home screen, he is prompted with another notification an instant later (in the subsequent round of the loop), allowing him/her to notice and activate the application 20 by acknowledging the notification.

The proposed method may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

## Claims

1. A computer implemented method for alerting an incoming communication in a communication application, wherein a communication service (30):
- receives a request, from at least one caller (C), for a communication destined to a user (UE) in at least one communication application (20), said communication application (20) being adapted for a determined operating system (10) that is installed in a computing device (D) of said user (UE) and being registered in said communication service (30), said computing device operating system (10) imposing restrictions when said communication application (20) runs in background or is offline, said imposed restrictions at least including prohibiting the communication application (20) to be brought to foreground of the computing device (D), or suspending the communication application (20) without notice; and
- checks a state of said communication application (20) with regard to the computing device (D),
**characterized in that** it comprises, if said state meaning that the communication application (20) being running in background of the computing device (D) or being offline thereof, performing following steps:
a) triggering, by the communication application (20), an indication to the computing device operating system (10) involving at least one of a visual indication, an audible indication or a vibration;
b) after a certain period of time, requesting by the communication application (20) to delete by said computing device operating system (10) said triggered indication; and
c) repeating steps a) and b) until the requested communication is established or the communication request from said caller (C) finishes.

2. The method of claim 1, wherein in case the communication application (20) running in background, the communication application (20) is notified, by the communication service (30), of the details of the requested communication right after said state checking.

3. The method of claim 1, wherein in case the communication application (20) being offline in the computing device (D), a push notification service (50) external of the computing device (D) is used, right after said state checking, for informing of the details of the requested communication and of an identifier thereof to the computing device operating system (10), the latter initiating the suspended or not running communication application (20).

4. The method of claims 2 or 3, wherein the communication application (20) further starts playing background audio for the requested communication.

5. The method of claim 1, wherein, previous to said triggering, any previous notification of the communication application (20) stored in the computing device operating system (10) is deleted.

6. The method of claim 1, comprising repeating steps a), b) and c) in case the user (UE) unlocks the computing device (D) and the communication application (20) remaining suspended or running in background of the computing device (D).

7. The method of previous claims, wherein said communication application (20) is a local application installed in the computing device (D).

8. The method of previous claims 1 to 6, wherein said communication application (20) is a web application running in a browser of another computing device.

9. The method of previous claims, wherein said requested communication is a real time communication including at least a voice call or a video call.

10. The method of claim 1, wherein said certain period of time is less than five seconds.

11. A computer implemented system for alerting an incoming communication in a communication application, the system comprising:
- a communication service (30) configured to receive from a caller (C) a request for a communication in at least one communication application (20) and to check a state of said communication application (20) with regard to a computing device (D) of a user (UE); and
- said communication application (20) configured to be registered in the communication service (30) and being appropriate for a determined operating system (10) installed in said computing device (D), the system being adapted to implement the method according to claim 1.

12. The system of claim 11, further comprising a push notification service (50) external of the computing device (D) configured to inform of the requested communication details and of an identifier thereof to the computing device operating system (10).

13. The system of claim 11, wherein said communication application (20) is installed in the computing device (D).

14. The system of claim 11, wherein said communication application (20) is a web application configured to run in a browser of another computing device.

15. A computer program product comprising computer program code means adapted to perform at least the steps according to the method of claim 1 when said program is run on a computer, a digital signal processor, a field-programmable gate array, an application-specific integrated circuit, a micro-processor, a micro-controller, or any other form of programmable hardware.

## Patentansprüche

1. Computerimplementiertes Verfahren zum Hinweisen auf eine eingehende Kommunikation in einer Kommunikationsanwendung, wobei ein Kommunikationsdienst (30):
- eine Anfrage von mindestens einem Anrufer (C) bezüglich einer Kommunikation, die für einen Nutzer (UE) in mindestens einer Kommunikationsanwendung (20) bestimmt ist, empfängt, wobei die Kommunikationsanwendung (20) für ein bestimmtes Betriebssystem (10) angepasst ist, das in einer Rechenvorrichtung (D) des Nutzers (UE) installiert ist und in dem Kommunikationsdienst (30) registriert ist, wobei das Rechenvorrichtungsbetriebssystem (10) Einschränkungen auferlegt, wenn die Kommunikationsanwendung (20) im Hintergrund läuft oder offline ist, wobei die auferlegten Einschränkungen mindestens das Verbieten, die Kommunikationsanwendung (20) in den Vordergrund der Rechenvorrichtung (D) zu bringen, oder das Aussetzen der Rechenvorrichtung (20) ohne Benachrichtigung umfassen; und
- einen Zustand der Kommunikationsanwendung (20) bezüglich der Rechenvorrichtung (D) prüft,
**dadurch gekennzeichnet, dass** es das Durchführen folgender Schritte umfasst, wenn der Zustand bedeutet, dass die Kommunikationsanwendung (20) im Hintergrund der Rechenvorrichtung (D) läuft oder diesbezüglich offline ist:
a) Auslösen durch die Kommunikationsanwendung (20) einer Anzeige gegenüber dem Rechenvorrichtungsbetriebssystem (10), die mindestens eine einer visuellen Anzeige, einer akustischen Anzeige oder einer Vibration beinhaltet;
b) nach einem bestimmten Zeitraum, Anfordern durch die Kommunikationsanwendung (20) eines Löschens durch das Rechenvorrichtungsbetriebssystem (10) der ausgelösten Anzeige; und
c) Wiederholen der Schritte a) und b), bis die angeforderte Kommunikation eingerichtet ist oder die Kommunikationsanfrage von dem Anrufer (C) beendet ist.

2. Verfahren nach Anspruch 1, wobei für den Fall, dass die Kommunikationsanwendung (20) im Hintergrund läuft, der Kommunikationsanwendung (20) von dem Kommunikationsdienst (30) die Details der angefragten Kommunikation direkt nach der Zustandsprüfung mitgeteilt werden.

3. Verfahren nach Anspruch 1, wobei für den Fall, dass die Kommunikationsanwendung (20) in der Rechenvorrichtung (D) offline ist, ein Push-Mitteilungsdienst (50), der bezüglich der Rechenvorrichtung (D) extern ist, direkt nach der Zustandsprüfung verwendet wird, um das Rechenvorrichtungsbetriebssystem (10) über die Details der angefragten Kommunikation und eine Kennung davon zu informieren, wobei ersteres die ausgesetzte oder nicht laufende Kommunikationsanwendung (20) startet.

4. Verfahren nach den Ansprüchen 2 oder 3, wobei die Kommunikationsanwendung (20) ferner die Wiedergabe von Hintergrund-Audio für die angefragte Kommunikation startet.

5. Verfahren nach Anspruch 1, wobei vor dem Auslösen eine beliebige vorherige Benachrichtigung der Kommunikationsanwendung (20), die in dem Rechenvorrichtungsbetriebssystem (10) gespeichert ist, gelöscht wird.

6. Verfahren nach Anspruch 1, umfassend das Wiederholen der Schritte a), b) und c) für den Fall, dass der Nutzer (UE) die Rechenvorrichtung (D) entsperrt und die Kommunikationsanwendung (20) ausgesetzt bleibt oder weiterhin im Hintergrund der Rechenvorrichtung (D) läuft.

7. Verfahren nach den vorherigen Ansprüchen, wobei die Kommunikationsanwendung (20) eine lokale Anwendung ist, die in der Rechenvorrichtung (D) installiert ist.

8. Verfahren nach den vorherigen Ansprüchen 1 bis 6, wobei die Kommunikationsanwendung (20) eine Web-Anwendung ist, die in einem Browser einer anderen Rechenvorrichtung läuft.

9. Verfahren nach den vorherigen Ansprüchen, wobei die angefragte Kommunikation eine Echtzeit-Kommunikation ist, die mindestens einen Sprachanruf oder einen Videoanruf umfasst.

10. Verfahren nach Anspruch 1, wobei der bestimmte Zeitraum weniger als 5 Sekunden beträgt.

11. Computerimplementiertes System zum Hinweisen auf eine eingehende Kommunikation in einer Kommunikationsanwendung, wobei das System Folgendes umfasst:
- einen Kommunikationsdienst (30), der konfiguriert ist, um von einem Anrufer (C) eine Anfrage bezüglich einer Kommunikation in mindestens einer Kommunikationsanwendung (20) zu erhalten und einen Zustand der Kommunikationsanwendung (20) bezüglich einer Rechenvorrichtung (D) eines Nutzers (UE) zu prüfen; und
- wobei die Kommunikationsanwendung (20) konfiguriert ist, um in dem Kommunikationsdienst (30) registriert zu werden und für ein bestimmtes Betriebssystem (10), das in der Rechenvorrichtung (D) installiert ist, geeignet zu sein,
wobei das System angepasst ist, um das Verfahren nach Anspruch 1 zu implementieren.

12. System nach Anspruch 11, ferner umfassend einen Push-Mitteilungsdienst (50), der bezüglich der Rechenvorrichtung (D) extern ist, der konfiguriert ist, um das Rechenvorrichtungsbetriebssystem (10) über die angefragten Kommunikationsdetails und eine Kennung davon zu informieren.

13. System nach Anspruch 11, wobei die Kommunikationsanwendung (20) in der Rechenvorrichtung (D) installiert ist.

14. System nach Anspruch 11, wobei die Kommunikationsanwendung (20) eine Web-Anwendung ist, die konfiguriert ist, um in einem Browser einer anderen Rechenvorrichtung zu laufen.

15. Computerprogrammprodukt, das Computerprogrammcodemittel umfasst, die angepasst sind, um mindestens die Schritte nach dem Verfahren nach Anspruch 1 auszuführen, wenn das Programm auf einem Computer, einem digitalen Signalprozessor, einer feldprogrammierbaren Gatteranordnung, einer anwendungsspezifischen integrierten Schaltung, einem Mikroprozessor, einem Mikrocontroller oder einer beliebigen sonstigen Form von programmierbarer Hardware läuft.

## Revendications

1. Procédé mis en oeuvre par ordinateur pour signaler une communication entrante dans une application de communication, dans lequel un service de communication (30) :
- reçoit une demande, d'au moins un appelant (A), pour une communication destinée à un utilisateur (UE) dans au moins une application de communication (20), ladite application de communication (20) étant adaptée pour un système d'exploitation déterminé (10) qui est installé dans un dispositif informatique (D) dudit utilisateur (UE) et étant enregistré dans ledit service de communication (30), ledit système d'exploitation du dispositif informatique (10) imposant des restrictions lorsque ladite application de communication (20) est exécutée en arrière-plan ou est hors-ligne, lesdites restrictions imposées comportant au moins l'interdiction à l'application de communication (20) d'être mise en premier-plan du dispositif informatique (D), ou la suspension de l'application de communication (20) sans préavis ; et
- vérifie un état de ladite application de communication (20) par rapport au dispositif informatique (D),
**caractérisé en ce qu'**il comprend, si ledit état signifie que l'application de communication (20) est exécutée en arrière-plan du dispositif informatique (D) ou est hors-ligne sur celui-ci, la réalisation des étapes suivantes :
a) le déclenchement, par l'application de communication (20), d'une indication au système d'exploitation du dispositif informatique (10) ayant au moins l'une parmi une indication visuelle, une indication sonore ou une vibration ;
b) après une certaine période de temps, la demande par l'application de communication (20) de suppression par ledit système d'exploitation du dispositif informatique (10) de ladite indication déclenchée ; et
c) la répétition des étapes a) et b) jusqu'à ce que la communication demandée soit établie ou que la demande de communication dudit appelant (A) soit terminée.

2. Procédé selon la revendication 1, dans lequel dans le cas où l'application de communication (20) est exécutée en arrière-plan, l'application de communication (20) est notifiée, par le service de communication (30), des détails de la communication demandée immédiatement après ladite vérification de l'état.

3. Procédé selon la revendication 1, dans lequel dans le cas où l'application de communication (20) est hors-ligne dans le dispositif informatique (D), un service de notification par pousser (50) externe au dispositif informatique (D) est utilisé, immédiatement après ladite vérification de l'état, pour informer des détails de la communication demandée et d'un identifiant de celle-ci au système d'exploitation du dispositif informatique (10), ce dernier lançant l'application de communication suspendue ou n'étant pas exécutée (20).

4. Procédé selon les revendications 2 ou 3, dans lequel l'application de communication (20) débute en outre en jouant un fond sonore pour la communication demandée.

5. Procédé selon la revendication 1, dans lequel, avant ledit déclenchement, toute notification antérieure de l'application de communication (20) stockée dans le système d'exploitation du dispositif informatique (10) est supprimée.

6. Procédé selon la revendication 1, comprenant la répétition des étapes a), b) et c) dans le cas où l'utilisateur (UE) débloque le dispositif informatique (D) et l'application de communication (20) étant toujours suspendue ou étant exécutée en arrière-plan du dispositif informatique (D).

7. Procédé selon les revendications précédentes, dans lequel ladite application de communication (20) est une application locale installée dans le dispositif informatique (D).

8. Procédé selon les revendications précédentes 1 à 6, dans lequel ladite application de communication (20) est une application web étant exécutée dans un navigateur d'un autre dispositif informatique.

9. Procédé selon les revendications précédentes, dans lequel ladite communication demandée est une communication en temps réel comportant au moins un appel vocal ou un appel vidéo.

10. Procédé selon la revendication 1, dans lequel ladite certaine période de temps est inférieure à cinq secondes.

11. Système mis en oeuvre par ordinateur pour signaler une communication entrante dans une application de communication, le système comprenant :
- un service de communication (30) configuré pour recevoir d'un appelant (A) une demande pour une communication dans au moins une application de communication (20) et pour vérifier un état de ladite application de communication (20) par rapport à un dispositif informatique (D) d'un utilisateur (UE) ; et
- ladite application de communication (20) configurée pour être enregistrée dans le service de communication (30) et étant appropriée pour un système d'exploitation déterminé (10) installé dans ledit dispositif informatique (D),
le système étant adapté pour mettre en oeuvre le procédé selon la revendication 1.

12. Système selon la revendication 11, comprenant en outre un service de notification par pousser (50) externe au dispositif informatique (D) configuré pour informer des détails de communication demandés et d'un identifiant de celle-ci au système d'exploitation du dispositif informatique (10).

13. Système selon la revendication 11, dans lequel ladite application de communication (20) est installée dans le dispositif informatique (D).

14. Système selon la revendication 11, dans lequel ladite application de communication (20) est une application web configurée pour être exécutée dans un navigateur d'un autre dispositif informatique.

15. Produit de programme informatique comprenant des moyens de code de programme informatique adaptés pour réaliser au moins les étapes suivant le procédé selon la revendication 1 lorsque ledit programme est exécuté sur un ordinateur, un processeur de signal numérique, un réseau prédiffusé programmable par l'utilisateur, un circuit intégré propre à une application, un microprocesseur, un microcontrôleur, ou toute autre forme de logiciel programmable.
